# DEMANDE DE BREVET EUROPEEN

(11) **EP 1 074 881 A1**
(43) Date de publication de la demande: **07.02.2001**
(21) Numéro de dépôt: 99202232.7
(22) Date de dépôt: 08.07.1999
(51) Int. Cl.: G03B 19/04, G03B 17/02, G03B 9/10, G03B 9/68

(54) **Appareil photographique du type jetable réalisé en polymère biodégradable**

(71) Demandeur: Brocart, Jean-Louis, 6800 Recogne (Libramont) (BE)
(72) Inventeur: Brocart, Jean-Louis, 6800 Recogne (Libramont) (BE)
(74) Mandataire: Meyers, Ernest

(57) **Abrégé**

L'appareil photographique du type jetable comprend, en autres, un boîtier opaque avec un bouton de déclenchement (32), un châssis inté-rieur (36) avec des moyens pour dévider, par action manuelle et par intermittence, un film photographique d'une bobine (44) et pour le faire défiler dans un champ de prise de vue, un obturateur (48) pour obturer et dégager le champ de prise de vue et un déclencheur (66) actionné par le bouton de déclenchement (32) pour agir sur l'obturateur. Tous les éléments précités, ainsi que leurs composants, sont réalisés en polymère biodégradable.

## Description

La présente invention concerne un appareil photographique du type jetable comprenant, entre autres, un boîtier opaque avec un bouton de déclenchement, un châssis intérieur avec des moyens pour dévider, par action manuelle et par intermittence, un film photographique d'une bobine et pour le faire défiler dans un champ de prise de vue, un obturateur pour obturer et dégager le champ de prise de vue et un déclencheur actionné par le bouton de déclenchement pour agir sur l'obturateur.

Actuellement, les appareils jetables ne sont pas écotaxés car ils bénéficient de collectes sélectives auprès des photographes professionnels après le développement des films. Les carcasses d'appareils sont acheminées dans une usine de retraitement spécialisée dont l'une se situe actuellement en France et qui est opérationnelle pour la plupart des pays européens. Après démantèlement de l'appareil, certaines pièces sont récupérées pour resservir dans de nouveaux appareils jetables, le reste étant recyclé dans des circuits de valorisation plus conventionnels (mobilier urbain, ...).

Ce système de recyclage est toutefois loin de fonctionner parfaitement. Si le centre de retraitement fonctionne, en principe, pour l'Europe entière, des études ont montré que le taux de retour était très variable d'un pays à l'autre et particulièrement faible pour les pays du sud de l'Europe. On observe en conséquence des proportions de rejet non négligeables et il en résulte un facteur de pollution environnementale important.

Une démarche pour remédier à ce problème écologique serait de refocaliser le marché sur les appareils conventionnels rechargeables. La logique marketing semble toutefois voir modifier de façon irréversible les modes de consommation et l'utilisation massive d'appareils jetables est aujourd'hui irrévocable.

Le but de la présente invention est de prévoir un appareil photographique écologique qui permet de résoudre ces problèmes.

Pour atteindre cet objectif, l'invention prévoit un appareil photographique du type jetable décrit dans le préambule, qui est caractérisé en ce que tous les éléments précités, ainsi que leurs composants, sont réalisés en polymère biodégradable.

Un tel appareil peut donc se décomposer entièrement en dioxyde de carbone, par exemple dans des boues activées par micro-organismes.

Les éléments et composants de l'appareil sont, de préférence, réalisés par moulage par injection.

Tous les éléments de l'appareil, notamment les éléments actifs et mobiles, ont été conçus en fonction des nouveaux matériaux utilisés pour leur réalisation.

C'est ainsi que l'opercule est, de préférence, une pièce en forme de « V » dont l'une des branches est une lame élastique et dont l'autre branche porte, à l'extrémité libre, un disque d'obturation et, à l'extrémité opposée, de jonction avec la lame élastique, un ergot actionnable par le déclencheur pour faire pivoter élastiquement le disque d'obturation.

Le déclencheur comporte, de préférence, une came rotative entraînée par l'avancement du film, une gâchette, un ressort et un levier d'armement pivotant.

Étant donné que la came effectue un tour de rotation par armement de l'appareil, c'est-à-dire un tour par prise de vue, la came peut servir également pour actionner un compte-poses.

D'autres particularités de l'invention ressortiront de la description détaillée d'un mode de réalisation avantageux, présenté ci-dessous, à titre d'illustration, en référence aux figures annexées, dans lesquelles :
- la figure 1 est une vue en perspective éclatée d'un appareil conformément à la présente invention ;
- la figure 2 est une vue de face et en perspective du châssis avec les éléments essentiels de l'appareil ;
- la figure 3 est une vue en perspective de l'opercule ;
- les figures 4 et 5 sont deux vues en perspective, sous des angles différents, de la came du déclencheur ;
- la figure 6 est une vue en perspective du ressort du déclencheur ;
- la figure 7 est une vue en perspective de la gâchette du déclencheur ;
- la figure 8 est une vue en perspective du levier d'armement ;
- la figure 9 est une vue en perspective de l'intérieur du boîtier et
- les figures 10 à 13 sont des vues en perspective illustrant différentes séquences de fonctionnement du déclencheur et de l'opercule.

L'appareil montré sur les figures est celui d'un prototype réalisé entièrement en matière biodégradable et qui a permis la réalisation de prises de vue avec un film classique de format 24 x 36. Le seul élément à n'avoir pu être réalisé en matière biodégradable est la lentille, faute d'avoir trouvé dans le commerce une matière appropriée à cet effet. Ceci n'exclut toutefois pas la possibilité de pouvoir réaliser à l'avenir également la lentille en matière biodégradable. En tout état de cause, il est toujours possible de fixer la lentille de telle manière qu'elle puisse être enlevée après l'usage de l'appareil et avant de se débarrasser de celui-ci.

Le prototype était, par ailleurs, un appareil sans flash incorporé car, à l'heure actuelle, il n'est pas possible de réaliser un flash en matière biodégradable. Ceci n'exclut non plus la possibilité de munir un appareil de ce type jetable d'un flash réutilisable.

Si le prototype a été conçu pour un appareil à film classique, il n'est pas exclu que l'invention convienne également pour des appareils du type APS.

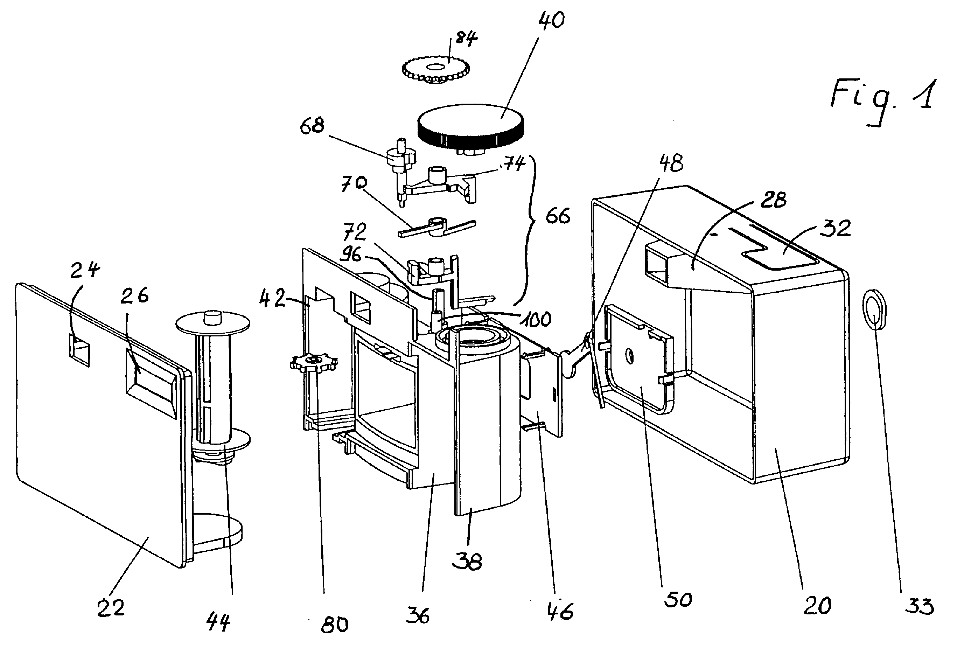

L'appareil jetable représenté globalement sur la figure 1 comporte un boîtier parallélépipédique 20 qui est fermé de manière opaque du coté arrière par un couvercle plat 22 pourvu d'une ouverture de visée 24 et d'une ouverture 26 d'accès à la molette d'avance du film.

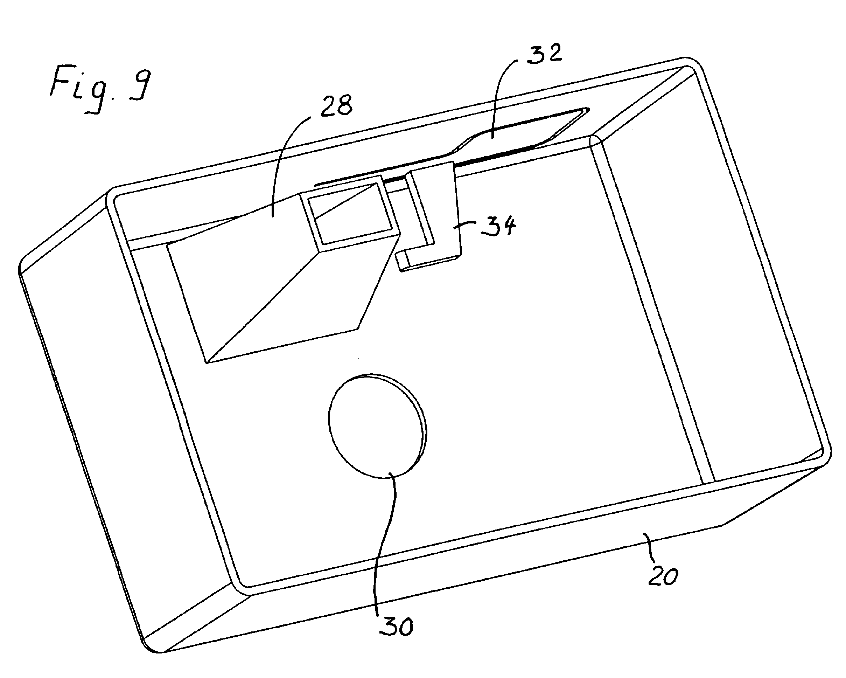

Le boîtier 20 (voir également figure 9) comporte un cône de visée 28 aligné sur l'ouverture de visée 24 du couvercle 22 ainsi qu'une ouverture 30 destinée à recevoir une lentille appropriée 33. Le boîtier 20 comporte, en outre, un bouton de déclenchement 32 pouvant être constitué simplement d'une découpe dans la paroi du boîtier 20. Le bouton 32 comporte, à l'intérieur du boîtier, un crochet 34 effectuant un pivotement dans le sens des aiguilles d'une montre sur la figure 9 lorsque le bouton est enfoncé pour actionner le déclencheur comme il sera décrit en détail plus loin.

La référence 36 désigne un châssis contenu dans le boîtier 20 et portant tous les composants actifs de l'appareil. Ce châssis 36 comporte, d'un côté, un logement 38 destiné à recevoir une bobine non montrée d'un film commercial et fermé du côté supérieur par une molette 40 d'avance de film accessible par l'ouverture 26 dans le couvercle 22. Du côté opposé au logement 38, le châssis 36 comporte un second logement 42 qui contient une bobine 44 faisant partie de l'appareil et donc en matière biodégradable.

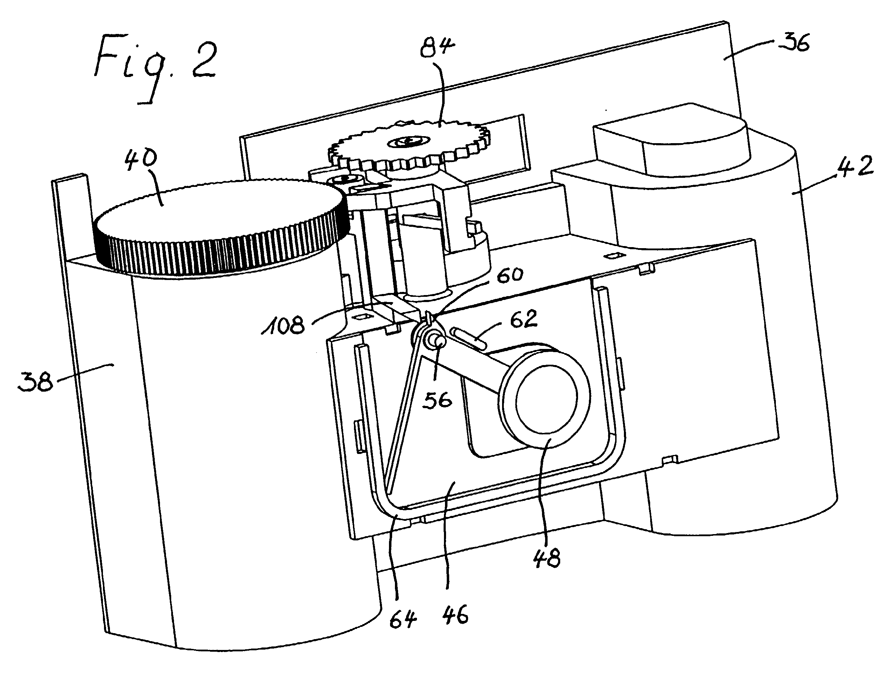

A l'avant du châssis 36 se trouve une plaque de support 46 (voir aussi figure 2) d'un opercule 48 et destinée à recevoir un couvercle 50 pour former une chambre contenant l'opercule 48. La plaque 46 et le couvercle 50 sont simplement maintenus en place par clipsage. Aussi bien la plaque de support 46 que le couvercle 50 comportent une ouverture (seulement visible sur le couvercle sur la figure 1) alignée sur la lentille 33.

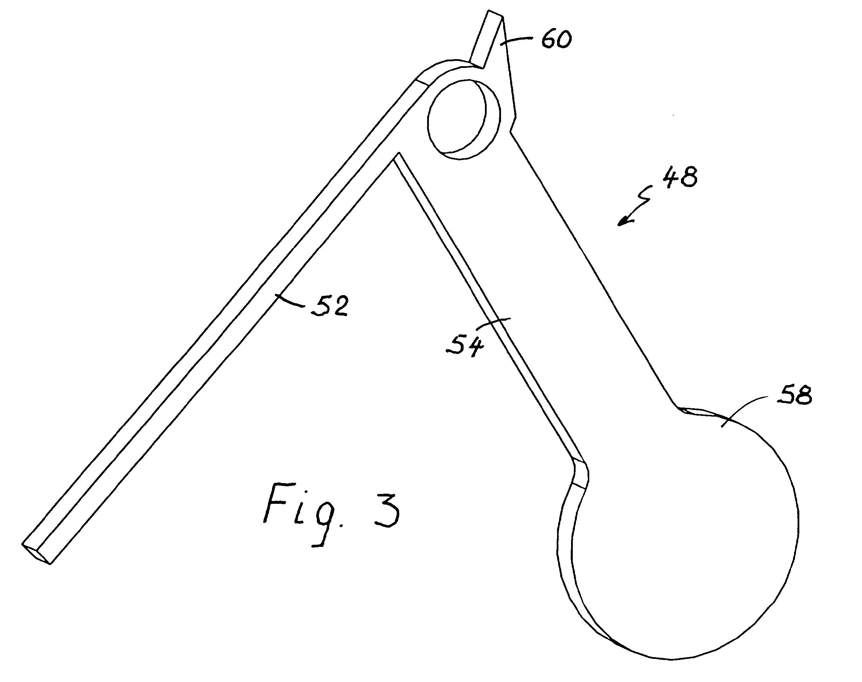

L'opercule 48 montré sur les figures 1 à 3 est l'un des éléments essentiels de l'appareil dans la mesure où il correspond au diaphragme d'un appareil classique. Cet obturateur doit pouvoir être déplacé rapidement hors de l'ouverture (non visible sur les figures 1 et 2) de la plaque de support 46 afin d'assurer l'exposition du film et la prise de vue. Étant donné que la rapidité du mouvement de l'obturateur est l'un des facteurs déterminants pour la qualité des photos, la conception de l'obturateur a eu une attention particulière compte tenu de la nature des matériaux utilisés. L'obturateur selon la présente invention a finalement permis de réaliser des durées d'ouverture inférieures à celles d'un appareil jetable classique dont les durées d'ouverture sont de l'ordre de 7 ms.

L'opercule 48 selon la présente invention comporte deux branches 52 et 54 en forme de « V » montées par leur jonction sur un axe de pivotement 56 de la plaque de support 46. L'extrémité libre de la branche 54 est conçue sous forme de disque d'obturation 58. La branche 52 possède, selon la nature des matériaux utilisés, une section appropriée pour avoir une rigidité élastique, c'est-à-dire pour pouvoir se déformer et exercer une fonction de ressort. L'obturateur possède par ailleurs un ergot 60 dépassant le bord supérieur de la plaque de support 46 pour coopérer avec un déclencheur et assurer l'ouverture de l'obturateur 48.

L'ouverture entre les deux branches 52, 54 est telle qu'en position de fermeture, l'obturateur 48, lorsqu'il est porté par son axe 56, soit légèrement comprimé entre une butée 62 sur la plaque 46 et un bord saillant 64 sur la plaque 46.

Un autre élément essentiel est le déclencheur 66 (figure 1) qui a dû être conçu spécialement en fonction des matériaux utilisés afin d'actionner l'obturateur 48 et réaliser des poses inférieures à 7 ms. Conformément à la présente invention, le déclencheur 66 est constitué d'une came 68, d'un ressort 70, d'une gâchette 72 et d'un levier d'armement 74, éléments qui seront décrits en détail ci-dessous en référence aux figures suivantes.

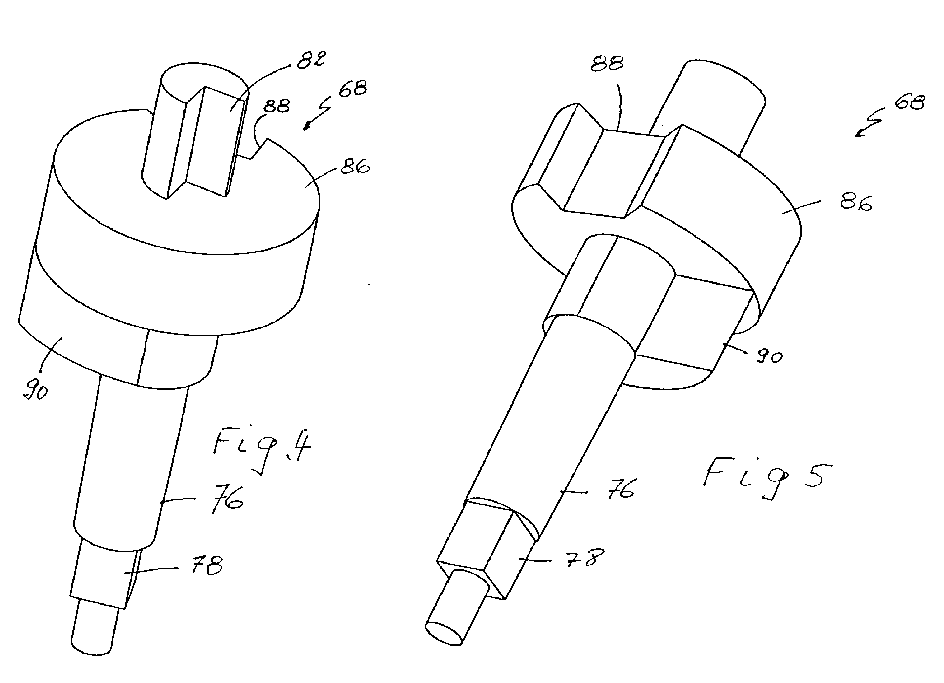

La came 68 montrée en perspective sur les figures 4 et 5 comporte un axe central 76 qui est monté verticalement dans le châssis 36 afin de pouvoir tourner autour de lui-même. La base de l'axe 76 possède une section polygonale 78, en l'occurrence carrée, qui est engagée dans un pignon d'entraînement 80 (figure 1). Les dents de ce pignon sont engagées dans les trous prévus le long d'un côté du film, si bien que la came est tournée sous l'effet de l'avancement du film.

L'extrémité de l'axe 76 opposée à la section 78 comporte un secteur découpé 82 qui coopère avec une couronne dentée d'une molette compte-poses 84 et qui sert à incrémenter celle-ci à chaque tour de rotation de la came 68.

En dessous du secteur découpé 82 se trouve un plateau circulaire 86 avec une encoche périphérique 88 qui sert à bloquer l'avance du film pour la prise de vue. Immédiatement en dessous du plateau 86 se trouve la came proprement dite 90 sous forme d'une rampe inclinée évoluant sur 360° en forme de spirale et servant à armer le déclencheur pendant la rotation de la came 68 provoquée par l'avancement du film.

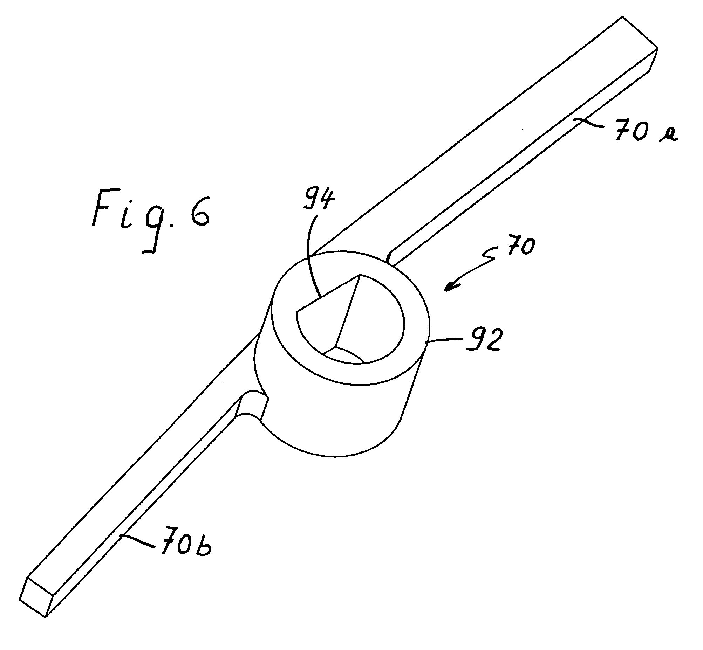

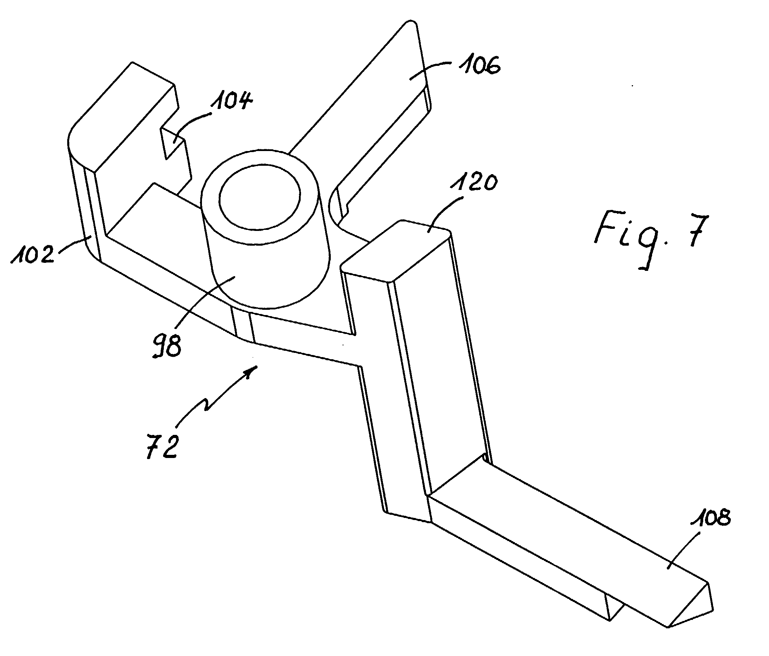

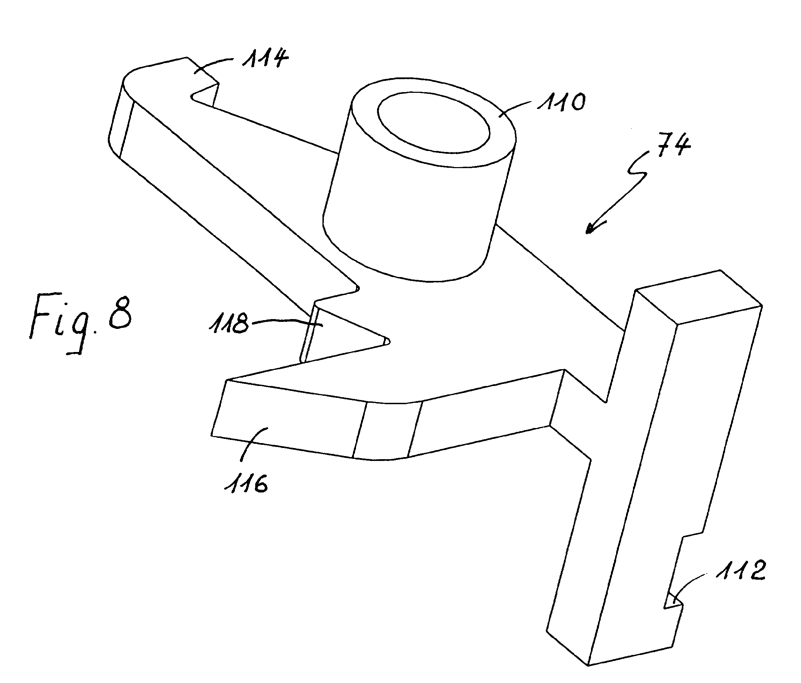

La figure 6 montre une vue en perspective du ressort 70. Il s'agit, en fait, d'un double ressort avec deux ailes 70a et 70b fixées sur un moyeu central 92. Le moyeu 92 comporte une ouverture axiale pour être engagée sur un axe vertical fixe 96 du châssis 36, l'ouverture axiale ayant une section plate 94 pour empêcher la rotation du ressort 70 autour de son axe.

Comme dans le cas de l'opercule 48, les sections des ailes 70a, 70b du ressort 70 sont, compte tenu du matériau utilisé, déterminées pour avoir une rigidité élastique appropriée permettant au ressort 70 d'exercer les fonctions qui lui sont attribuées.

La figure 7 montre une vue en perspective de la gâchette 72. Il s'agit d'une pièce complexe qui déclenche l'ouverture de l'opercule 48 sous l'action du ressort 70. La gâchette 72 comporte un moyeu 98 avec une ouverture axiale permettant à la gâchette 72 de pivoter autour d'un axe vertical 100 solidaire du châssis 36. La gâchette 72 comporte un levier 102 avec une encoche 104 formant un logement pour l'extrémité de l'aile 70a du ressort. Autrement dit, vu du dessous sur l'appareil ainsi que sur la figure 7, la gâchette 72 est sollicitée par le ressort 70 dans le sens trigonométrique. La gâchette 72 comporte par ailleurs un bras 106 coopérant avec la came 90 et qui est maintenu sur celle-ci sous l'action du ressort 70. Autrement dit, la rotation de la came 90 fait pivoter la gâchette 72 dans le sens des aiguilles d'une montre contre l'action du ressort 70.

Le côté opposé du levier 102 comporte un doigt 108 agissant sur l'ergot 60 de l'obturateur 48. La surface inférieure de ce doigt est inclinée comme on peut le voir sur la figure 2. Cette inclinaison combinée à une certaine flexibilité du doigt 108, permet à celui-ci de passer par-dessus l'ergot 60 lorsque la gâchette est pivotée dans le sens des aiguilles d'une montre sous l'effet de la rotation de la came 68.

La figure 8 montre une vue en perspective du levier d'armement 74. Celui-ci comporte un moyeu 110 avec un passage axial permettant au levier 74 d'être engagé sur l'axe 96 au-dessus du ressort 70. Toutefois, contrairement au ressort 70, le levier d'armement peut pivoter autour de son axe 96.

Le levier d'armement 74 comporte une encoche 112 servant de logement à l'extrémité de l'aile 70b du ressort 70. Le levier est donc sollicité par le ressort dans le sens des aiguilles d'une montre. L'extrémité opposée du levier d'armement est conçue sous forme de cliquet 114 évoluant à la périphérie du plateau 86 de la came 68 et pouvant pénétrer dans l'encoche périphérique 88 de celle-ci. Le levier d'armement 74 comporte, par ailleurs, une dent 116 destinée à coopérer avec les stries périphériques de la molette 40 d'avance du film pour le bloquer en position de prise de vue.

Le côté intérieur de cette dent 116 est conçu sous forme de butée d'arrêt 118 destinée à coopérer avec une tige verticale 120 de la gâchette 72.

A l'achat d'un appareil selon la présente invention, le film sensible se trouve, comme dans les appareils jetables conventionnels, sur la bobine 44 sur laquelle il a été bobiné par le fabricant. C'est l'utilisateur qui rembobine le film sur la bobine originale à développer, dans le logement 38, pendant l'usage de l'appareil. C'est donc le contraire d'un appareil classique dans lequel le film est débobiné de la bobine d'achat pendant l'usage pour y être rembobiné d'un trait lorsque le film est terminé.

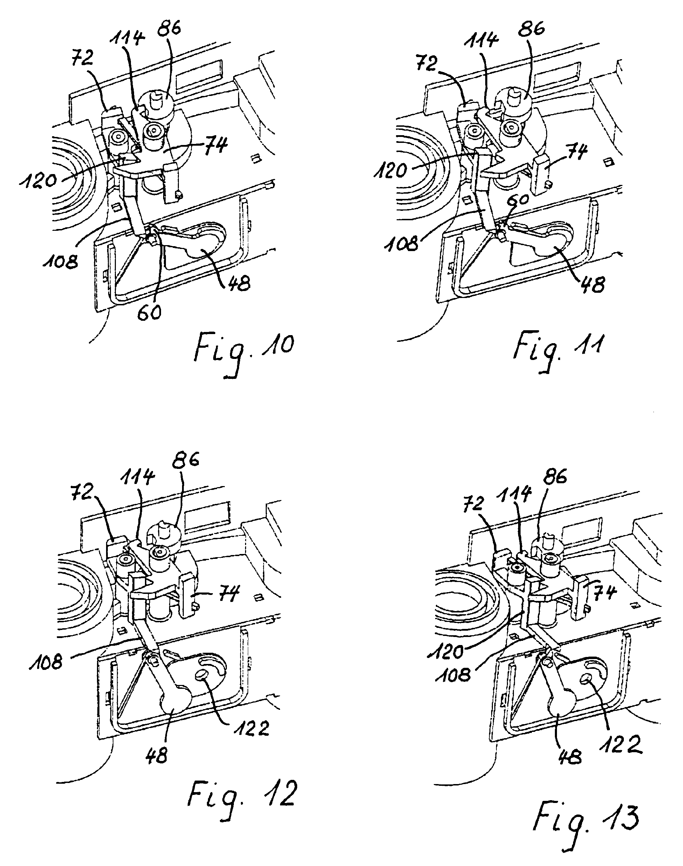

On va, à présent, décrire le fonctionnement de l'appareil en référence notamment aux figures 10 à 13 et en commençant dans une position correspondant à la fin d'une prise de vue. Dans cette position, l'aile 70b du ressort 70 se trouve dans sa position la plus détendue et la gâchette 72 se trouve dans sa position extrême de pivotement dans le sens trigonométrique, ce qui signifie que le doigt 108 se trouve à droite (vu sur la figure 2) de l'ergot 60 de l'opercule et que le bras 106 se trouve au fond de la came 90. Le cliquet 114 du levier d'armement 74 se trouve hors de l'encoche 88 de la came et l'opercule 48 est, bien entendu, fermé sous l'effet de l'élasticité de sa branche 52.

Lorsqu'on actionne la molette 40 pour bobiner le film sur la bobine dans le logement 38, l'avance du film fait tourner le pignon 80 et la came 68 dans le sens trigonométrique. L'action de la came 90 sur le bras 106 de la gâchette 72 fait pivoter celle-ci dans le sens des aiguilles d'une montre contre l'action du ressort 70a et en tendant celui-ci. Le levier d'armement 74 ne bouge pas car le cliquet 114 évolue sur la partie circonférentielle du plateau 86. Lors du pivotement de la gâchette 72, le doigt 108 est soulevé par-dessus l'ergot de l'opercule 48 sans modifier la position de celui-ci.

A la fin d'un tour de rotation de la came 68, l'encoche 88 se présente devant le cliquet 114, ce qui permet au levier d'armement 74 de pivoter sous l'effet de son ressort 70b jusqu'à ce que le cliquet 114 tombe au fond de l'encoche et empêche la poursuite de la rotation de la came 68. Ce pivotement du levier d'armement 74 engage, par ailleurs, la pointe de la dent 116 dans une des stries de la molette 40, ce qui bloque provisoirement l'avance du film.

Les positions angulaires relatives de l'encoche 88 et de la came 90 sont telles qu'au moment où le cliquet 144 tombe dans l'encoche 88 et permet au levier 74 de pivoter dans le sens des aiguilles d'une montre, le sommet de la came 90 quitte le bras 106 de la gâchette 72 libérant celle-ci à l'action de son de son ressort 70a. La gâchette peut donc pivoter dans le sens trigonométrique, mais ce pivotement se termine immédiatement par l'arrêt de la tige 120 de la gâchette 72 devant la butée 118 du levier d'armement 74. L'appareil est ainsi armé pour la prochaine prise de vue. Cette position est illustrée sur la figure 10 et correspond à un blocage mutuel de toutes les pièces mobiles. L'appareil est également sous tension, notamment celle du ressort 70a, vu que la gâchette 72 n'a guère bougé.

Pour prendre la prochaine photo, il faut actionner le déclencheur 66 par le bouton de déclenchement 32 (figure 1). En enfonçant le bouton 32, on fait pivoter le crochet 34 qui agit sur le levier d'armement 74 pour faire pivoter celui-ci dans le sens trigonométrique. Ce pivotement dégage les cliquets 114 de l'encoche 80 de la came 68 et, surtout, libère la tige 120 de la butée d'arrêt 118 du levier d'armement 74 comme montré sur la figure 11.

La gâchette 72 qui est, dés lors, entièrement libérée sous l'action de son ressort 70a, peut pivoter dans le sens trigonométrique. Ce pivotement provoque l'engagement du doigt 108 avec l'ergot 60 de l'opercule et, à son tour, le pivotement élastique de la branche 54 de l'opercule 48 en direction de la branche 54 pour dégager l'ouverture de prise de vue 122 comme montré sur la figure 12. Dès que l'action du doigt 108 sur l'ergot 60 de l'opercule se termine (figure 13), l'élasticité de la branche 52 renvoie l'opercule 48 dans sa position fermée, bloqué par la butée 62. L'appareil peut dès lors être armé à nouveau pour la prochaine prise de vue.

De nombreux tests sur des polymères biodégradables ont précédé la réalisation du prototype décrit ci-dessus. Le tableau suivant est un tableau synoptique des différents grades testés avant et en cours de réalisation du prototype.

| **Grade** | **Fournisseur** | **Composition**^{**1**} |
|---|---|---|
| LP BAK® 105-004 | Bayer | Polyesters amides renforcés par des charges minérales (mica) Polycondensation de caprolactame, acide adipique et butane diol Polymère pétrochimique |
| LP BAK® 103-004 | Bayer | Idem |
| LP BAK® 402-005 | Bayer | Idem |
| BIONOLLE® 1020 | Showa High Polymères | Polyester aliphatique Monomère pétrochimique Poly (Butylène) Succinate |
| BIONOLLE® 3020 | Showa High Polymères | Idem Poly (Butylène) Succinate/Adipate |
| BIOPLAST® GS902 | Biotec GmbH | A base d'amidon Base naturelle |
| BIOCETA® 6V-30-S-T | Mazzucchelli | Diacétate de cellulose issue du coton ou du bois, plastifiants et stabilisants naturels Matériau modifié d'origine naturelle |
| MATER-BI® YIO1U | Novamont | Amidon, dérivés de cellulose et plastifiants naturels Base naturelle |
| MATER-BI® AI06H | Novamont | Amidon, copolymère éthylène-vinylalcohol et plastifiants naturels Base naturelle |
| BIOMAX® | Dupont | Copolyester polyéthylène téréphtalate, diméthyl glutarate, diéthylène glycol |

| | | |
|---|---|---|
| ¹ Non-exhaustif, fourni pour information sur base des indications disponibles auprès des fournisseurs | | |

Tous ces polymères sont dégradables plus ou moins rapidement dans des boues activées par des micro-organismes. Parmi les produits testés, le grade BIONOLLE® 1020 a donné satisfaction pour les pièces ayant une fonction de ressort, c'est-à-dire le ressort lui-même et l'obturateur.

Le grade BIOCETA®, quoique translucide à transparent, en fines épaisseurs, n'a pu démontrer des qualités optiques suffisantes permettant de l'utiliser pour la fabrication de la lentille. Celle-ci devra donc rester en polymère conventionnel à condition qu'elle puisse être facilement démontée lors de l'enlèvement du film.

Les tests effectués ont notamment porté sur :
- la rigidité pouvant être atteinte en fines épaisseurs, de l'ordre de 1 mm,
- la tenue en température (mise à l'étuve 24 heures à 80°C) et
- la possibilité de colorisation en masse et l'obtention de grades opaques de couleur noire.

En termes de rigidité, les éprouvettes LP-BAK® 105-004, MATER-BI® YI01U et BIOMAX® ont qualitativement un comportement similaire aux polystyrènes habituellement utilisés pour les différents composants d'appareils jetables connus. Le grade BIOMAX® présente néanmoins des difficultés de moulage en fines épaisseurs.

En termes de tenue en température, un séjour de 24 heures en étuve à 80°C a montré que les trois grades LP-BAK® ainsi que le BIONOLLE® 1020 ne présentent pas de variations dimensionnelles visibles.

Les essais réalisés, sur base des échantillons disponibles, mettent en évidence que les grades LP-BAK® 105-004 offrent un bon compromis de propriété, même sans coloration par noir de carbone, puisque naturellement de couleur brune opaque.

## Revendications

1. Appareil photographique du type jetable, comprenant, en autres, un boîtier opaque avec un bouton de déclenchement (32), un châssis intérieur (36) avec des moyens pour dévider, par action manuelle et par intermittence, un film photographique d'une bobine (44) et pour le faire défiler dans un champ de prise de vue, un obturateur (48) pour obturer et dégager le champ de prise de vue et un déclencheur (66) actionné par le bouton de déclenchement (32) pour agir sur l'obturateur, caractérisé en ce que tous les éléments précités, ainsi que leurs composants, sont réalisés en polymère biodégradable.

2. Appareil selon la revendication 1, caractérisé en ce que ces composants sont réalisés par moulage par injection.

3. Appareil selon la revendication 1, caractérisé en ce que l'opercule (48) est une pièce en forme de « V » dont l'une des branches (52) est une lame élastique et dont l'autre branche (54) porte, à l'extrémité libre, un disque d'obturation (58) et, à l'extrémité de jonction avec la lame élastique (52), un ergot (60) actionnable par le déclencheur (66) pour faire pivoter élastiquement le disque d'obturation (58).

4. Appareil selon la revendication 1, caractérisé en ce que le déclencheur comporte une came rotative (68) entraînée par l'avancement du film, une gâchette (72), un ressort (70) et un levier d'armement pivotant (74).

5. Appareil selon la revendication 4, caractérisé en ce que la came (68) comporte une rampe en spirale (90) agissant sur un bras (106) de la gâchette (72) pour faire pivoter celle-ci contre l'action du ressort (70) et un plateau circulaire (86) avec une encoche (88) coopérant avec un cliquet (114) du levier d'armement (74) pour faire pivoter celui-ci sous l'action du ressort (70) et en position d'armement, dans une position de verrouillage de la gâchette (72).

6. Appareil selon la revendication 5, caractérisé en ce que la gâchette (72) est déverrouillable par pivotement du levier d'armement (74) contre l'action du ressort (70) et sous l'action du bouton de déclenchement (32).

7. Appareil selon la revendication 6, caractérisé en ce que la gâchette comporte un doigt (108) agissant sur l'ergot (60) de l'obturateur (48).
